# EUROPEAN PATENT SPECIFICATION

(11) **EP 1 772 489 B1**
(45) Date of publication and mention of the grant of the patent: **25.05.2011**
(21) Application number: 05758281.9
(22) Date of filing: 11.07.2005
(51) Int. Cl.: C08L 23/28, B60C 1/00, C08K 3/04

(54) **RUBBER COMPOSITION FOR INNER LINER AND PNEUMATIC RADIAL TIRE OBTAINED WITH THE SAME**
KAUTSCHUKZUSAMMENSETZUNG FÜR INNERLINER UND DAMIT ERHALTENER RADIALLUFTREIFEN
COMPOSITION DE CAOUTCHOUC POUR CALANDRAGE INTERIEUR ET PNEU RADIAL FABRIQUE AVEC UNE TELLE COMPOSITION

(30) Priority: 23.07.2004 JP 2004215855
(43) Date of publication of application: 11.04.2007
(73) Proprietor: Bridgestone Corporation, Tokyo 104-8340 (JP)
(72) Inventor: AKAISHI, Koji c/o BRIDGESTONE CORPORATION, Kodaira-shi, Tokyo 1878531 (JP)
(74) Representative: Whalley, Kevin
(86) International application number: PCT/JP2005/012775
(87) International publication number: WO 2006/009002

(56) References cited:
- GB-A- 2 140 447
- JP-A- 4 359 943
- JP-A- 5 179 068
- JP-A- 6 306 217
- JP-A- 10 273 560
- JP-A- 57 061 138
- JP-A- 60 223 840
- JP-A- 2004 511 638
- US-A- 5 284 890
- US-A- 5 290 886
- US-A1- 2004 106 724

## Description

This invention relates to an innerliner which is suitable for a tire for a vehicle used under an ultracold temperature condition such as an airplane, a truck, a bus, a passenger car and a pneumatic radial tire using the same, and more particularly to an innerliner capable of establishing an air-retaining property and a tire durability under an ultracold temperature condition and a pneumatic radial tire using the same.

Since a tire for vehicles such as an airplane, a truck, a bus, a passenger car is used under various environments, it is required to operate even in use under an ultracold temperature condition. For example, a tire for an airplane must fly in an atmosphere of -65°C, while a tire for a vehicle such as a truck, a bus, a passenger car may be used in an ultracold land of -50°C.

A rubber composition containing a rubber component having a low air permeability such as halogenated butyl rubber at a high content is commonly used for an innerliner disposed on an inner surface of a pneumatic tire in order to prevent air leakage and hold a constant air pressure in the tire. However, since the rubber component having a low air permeability such as halogenated butyl rubber has a high glass transition temperature (Tg), the innerliner containing the halogenated butyl rubber at a high content has a problem that cracking is caused under an ultracold condition and it is impossible to sufficiently hold an air pressure of the tire.

On the contrary, a rubber composition using natural rubber or synthetic isoprene rubber as a part or whole of the rubber component may be applied to the innerliner in order to ensure the crack resistance under an ultracold temperature condition. In this case, there is a problem that the air-retaining property of the innerliner is insufficient, so that the conflicting relation between the air-retaining property and the crack resistance under an ultracold temperature condition cannot be solved.

Moreover, many rubber compositions for innerliners are known from JP-A-H04-359943, JP-A-H10-258603, JP-A-2002-88209 and WO 01/62846A, but there is not known a technique focusing attention on the crack resistance under an ultracold temperature condition.

Attention is also drawn to the disclosures of US 2004/106724 A and GB-2 140 447 A.

It is, therefore, an object of the invention to solve the above-mentioned problems of the conventional techniques and to provide a rubber composition for an innerliner capable of simultaneously establishing the air-retaining property of a tire and the crack resistance under an ultracold temperature condition. Also, it is another object of the invention to provide a pneumatic radial tire using such a rubber composition for an innerliner and having excellent air-retaining property and durability under an ultracold temperature condition.

The inventor has made various studies in order to achieve the above objects and discovered that the air-retaining property and durability under an ultracold temperature condition in the tire can be highly improved by applying a rubber composition formed by compounding a softener having a glass transition temperature within a specified range into a rubber component containing a certain amount or more of halogenated butyl rubber to the innerliner, and as a result the invention has been accomplished.

That is, the innerliner according to the invention is characterized by comprising 1 to 30 parts by mass of a softener having a glass transition temperature of not higher than -90°C based on 100 parts by mass of a rubber component comprising 0 to 20% by mass of natural rubber and/or synthetic isoprene rubber and 80 to 100% by mass of halogenated butyl rubber.

In a preferable embodiment of the rubber composition for are the innerliner according to the invention, the amount of the softener compounded is 4 to 20 parts by mass based on 100 parts by mass of the rubber component. When the amount of the softener compounded is within this range, the effect of improving the crack resistance under an ultracold temperature condition is large and the anti-air permeability of the rubber composition for the innerliner can be sufficiently ensured.

The rubber composition for the innerliner according to the invention preferably further contains 30 to 70 parts by mass of carbon black based on 100 parts by mass of the rubber component. When the amount of the carbon black compounded is within this range, the lowering of crack resistance and the deterioration of low heat build-up in the rubber composition can be avoided. In view of improving the crack resistance and low heat build-up in the rubber composition, the carbon black is more preferably GPF and/or FEF grade.

Moreover, the pneumatic radial tire according to the invention is characterized in that the above-described innerliner is used. The pneumatic radial tire according to the invention is preferably any of a tire for an airplane and a tire for a truck or bus.

According to the invention, there can be provided an innerliner capable of establishing the air-retaining property and crack resistance under an ultracold temperature condition in a tire by compounding the softener having a glass transition temperature within the specified range into the rubber component containing a certain amount or more of halogenated butyl rubber. Also, there can be provided a pneumatic radial tire using such a rubber composition for the innerliner and having excellent air-retaining property and durability under an ultracold temperature condition.

The invention will be described in detail below. The rubber composition for the innerliner according to the invention is characterized by comprising 1 to 30 parts by mass of a softener having a glass transition temperature of not higher than -90°C based on 100 parts by mass of a rubber component comprising 0 to 20% by mass of natural rubber and/or synthetic isoprene rubber and 80 to 100% by mass of halogenated butyl rubber. Since the rubber composition for the innerliner according to the invention contains the halogenated butyl rubber at a high content, the anti-air permeability thereof is high, and the innerliner using the rubber composition has high air-retaining property. Also, since the rubber composition for the innerliner according to the invention contains the softener having a low Tg, the crack resistance under an ultracold temperature condition is improved.

In the rubber component in the rubber composition for the innerliner of the invention, the content in total of the natural rubber (NR) and/or synthetic isoprene rubber (IR) is 0 to 20% by mass and the content of the halogenated butyl rubber is of 80 to 100% by mass. When the content of the halogenated butyl rubber in the rubber component is less than 80% by mass, or when the total content of the natural rubber and/or synthetic isoprene rubber exceeds 20% by mass, the anti-air permeability is deteriorated and the air-retaining property of the innerliner cannot be sufficiently ensured.

As the halogenated butyl rubber are mentioned chlorinated butyl rubber, brominated butyl rubber, their modified rubbers. As the chlorinated butyl rubber are mentioned "Enjay butyl HT 10-66^{™}" made by Enjay Chemical Corporation. As the brominated butyl rubber are mentioned "Bromobutyl 2255^{™}" made by Exxon Corporation. As the modified rubber can be used chlorine or bromine-modified copolymer of isomonoolefin and paramethylstyrene and "Exxpro 50^{™}" made by Exxon Corporation is specifically mentioned. These halogenated butyl rubbers may be used alone or in a blend of two or more. On the other hand, the natural rubber and the synthetic isoprene rubber are not particularly limited, and natural rubber and synthetic isoprene rubbers commonly used in rubber compositions can be used.

The softener used in the rubber composition for the innerliner of the invention has a glass transition temperature (Tg) of not higher than -90°C. When the Tg of the softener exceeds -90°C, the crack resistance under an ultracold temperature condition cannot be ensured, and hence it is necessary to increase the content of natural rubber and/or synthetic isoprene rubber in the rubber component or increase the amount of the softener, but the anti-air permeability of the rubber composition is deteriorated in any case and the object of the invention cannot be accomplished. The glass transition temperature (Tg) of the softener is a value determined by measuring with a differential scanning calorimeter (DSC) according to ASTM D3418-82 (Peapproved 1988). The softener is not particularly limited provided it has Tg of not higher than -90°C. As the softener may be used one properly selected from softeners for rubber and are mentioned, for example, a phosphate ester such as tris(2-ethylhexyl)phosphate a sebacate ester such as di-n-butyl sebacate, and so on. These softeners may be used alone or in a combination of two or more.

The amount of the softener compounded in the rubber composition for the innerliner of the invention is 1 to 30 parts by mass, preferably 4 to 20 parts by mass based on 100 parts by mass of the rubber component. When the amount of the softener compounded is less than 1 part by mass based on 100 parts by mass of the rubber component, the crack resistance under an ultracold temperature condition cannot be ensured, while when it exceeds 30 parts by mass, the anti-air permeability of the rubber composition is considerably deteriorated. Moreover, when the amount of the softener compounded is not less than 4 parts by mass based on 100 parts by mass of the rubber component, the effect of improving the crack resistance under an ultracold temperature condition is large, while when it is not more than 20 parts by mass, the anti-air permeability of the rubber composition can be sufficiently ensured.

The rubber composition for the innerliner of the invention preferably contains 30 to 70 parts by mass of carbon black as a filler based on 100 parts by mass of the rubber component. When the amount of the carbon black compounded is less than 30 parts by mass, the crack resistance of the rubber composition is deteriorated, while when it exceeds 70 parts by mass, the low heat build-up of the rubber composition is deteriorated. The kind of the carbon black used as a filler is not particularly limited and SRF, GPF, FEF, HAF, ISAF, SAF grade carbon black can be used, but GPF and FEF grade carbon blacks are preferable in view of improving the crack resistance and low heat build-up of the rubber composition. These carbon blacks may be used alone or in a combination of two or more.

In the rubber composition for the innerliner of the invention can be compounded additives usually used in the rubber industry, for example, another filler such as silica or the like, an oil, a resin, an antioxidant, a vulcanizing agent, a vulcanizing aid, a vulcanization accelerator, an anti-scorching agent within amounts not damaging the object of the invention in addition to the above rubber component, the softener and the carbon black. As these additives can be preferably used commercially available ones. Moreover, the rubber compositions can be produced by compounding the rubber component with the softener and the various additives properly selected if necessary and milling, warming, extruding and so on.

The pneumatic radial tire according to the invention is characterized in that the above-mentioned rubber composition is used in an innerliner, and has excellent air-retaining property and durability under an ultracold temperature condition. The pneumatic radial tire according to the invention can be used as a tire for vehicles such as an airplane, a truck, a bus, a passenger car and the like, and is particularly preferable as a tire for an airplane and a tire for a truck or bus which are used under a high load and severely demanded to have an improved crack resistance under an ultracold temperature condition. The pneumatic tire according to the invention is not particularly limited as far as the above-mentioned rubber composition is used in the innerliner, and can be produced by the usual method. Moreover, as a gas filled into the pneumatic radial tire can be used usual air or air having a regulated partial oxygen pressure but also inert gases such as nitrogen, argon, helium and so on.

The following examples are given in illustration of the invention and are not intended as limitations thereof.

A rubber composition for an innerliner having a compounding recipe as shown in Table 1 is prepared according to the usual method. The crack resistance under an ultracold temperature condition and air-retaining property of the resulting rubber composition for the innerliner are evaluated by the following methods. The results are shown in Table 1. Moreover, the Tg of the softener used is measured with a differential scanning calorimeter (DSC) according to ASTM D3418-82 (Peapproved 1988).

### (1) Crack resistance under an ultracold temperature condition

The brittle temperature of each rubber composition is measured according to a method of an impact brittleness test at low temperature described in JIS K 6301 and shown by an index on the basis that the brittle temperature of the rubber composition in Comparative Example 1 is 100. The larger the index value, the better the crack resistance under the ultracold temperature condition.

### (2) Air-retaining property

The gas-permeation coefficient of each rubber composition is measured according to a method A (differential pressure method) of "a test method for a gas permeability of a plastic film and sheet" in JIS K 7126 and shown by an index on the basis that the gas-permeation coefficient of the rubber composition in Comparative Example 1 is 100. The larger the index value, the lower the gas-permeation coefficient and the better the air-retaining property.

**Table 1**

| | | Comparative example 1 | Example 1 | Example 2 | Example 3 | Comparative example 2 |
|---|---|---|---|---|---|---|
| Natural rubber | parts by mass | 50 | 20 | - | - | - |
| Halogenated butyl rubber *1 | | 50 | 80 | 100 | 100 | 100 |
| Carbon black A *2 | | 65 | 70 | 40 | - | - |
| Carbon black B *3 | | - | - | - | 60 | 70 |
| Softener A *4 | | 7 | - | - | - | 35 |
| Softener B *5 | | - | 7.5 | 10 | 20 | - |
| Stearic acid | | 1.0 | 1.0 | 1.0 | 1.0 | 1.0 |
| Zinc white | | 2.0 | 2.0 | 2.0 | 2.0 | 2.0 |
| Vulcanization accelerator DM *6 | | 1.0 | 1.0 | 1.0 | 1.0 | 1.0 |
| Sulfur | | 1.0 | 1.0 | 1.0 | 1.0 | 1.0 |
| Crack resistance under an ultracold temperature condition | index | 100 | 100 | 100 | 110 | 100 |
| Air-retaining property | | 100 | 140 | 170 | 130 | 90 |

| | | | | | | |
|---|---|---|---|---|---|---|
| *1 Brominated butyl rubber, BROMOBUTYL 2030 made by BAYER Corporation. *2 Nitrogen adsorption specific surface area = 35 m²/g, Asahi #55 (N660) made by Asahi Carbon Co., Ltd. GPF grade. *3 Nitrogen adsorption specific surface area = 42 m²/g, Asahi #60 (N550) made by Asahi Carbon Co., Ltd. FEF grade. *4 Diana Process Oil NS-28 made by Idemitsu Kosan Co., Ltd. Tg = -80°C. *5 TOP made by DAIHACHI CHEMICAL INDUSTRY Co., Ltd. tris(2-ethylhexyl)phosphate, Tg = -120°C. *6 Dibenzothiazyl disulfide | | | | | | |

As shown from Table 1, the air-retaining property of the rubber composition in each example wherein the specified amount of the softener having a glass transition temperature of not higher than -90°C is compounded into the rubber component containing not less than 80% by mass of halogenated butyl rubber is highly improved as compared with that in Comparative Example 1, and the crack resistance under the ultracold temperature condition thereof is sufficiently maintained. On the other hand, the crack resistance under the ultracold temperature condition in Comparative Example 2 wherein a large amount of a softener having a glass transition temperature of higher than -90°C is compounded is maintained, but the air-retaining property thereof is inferior to that of the Comparative Example 1.

## Claims

1. An innerliner for a tire, comprising a rubber composition which comprises 1 to 30 parts by mass of a softener having a glass transition temperature of not higher than -90°C based on 100 parts by mass of a rubber component comprising 0 to 20% by mass of natural rubber and/or synthetic isoprene rubber and 80 to 100% by mass of halogenated butyl rubber,
wherein said glass transition temperature is measured with a differential scanning calorimeter (DSC) according to ASTM D3418-82.

2. An innerliner according to claim 1, wherein the amount of the softener compounded is 4 to 20 parts by mass based on 100 parts by mass of the rubber component.

3. An innerliner according to claim 1 wherein the rubber composition further contains 30 to 70 parts by mass of carbon black based on 100 parts by mass of the rubber component.

4. An innerliner according to claim 3, wherein the carbon black is GPF and/or FEF grade.

5. A pneumatic radial tire, comprising an innerliner as claimed in any of claims 1 to 4.

6. A pneumatic radial tire according to claim 5, which is any of a tire for an airplane and a tire for a truck or bus.

## Patentansprüche

1. Innenseele für einen Reifen, umfassend eine Kautschukzusammensetzung, die 1 bis 30 Massenteile eines Weichmachers, der eine Glasübergangstemperatur von nicht mehr als -90 °C aufweist, auf 100 Massenteile einer Kautschukkomponente bezogen, umfasst, die 0 bis 20 Massenprozent Naturkautschuk und/oder synthetischen Isoprenkautschuk und 80 bis 100 Massen-% halogenierten Butylkautschuk umfasst,
wobei die Glasübergangstemperatur mit einem Differential-Scanning-Kalorimeter (DSC) ASTM D3418-82 gemäß gemessen wird.

2. Innenseele nach Anspruch 1, wobei die Menge des compoundierten Weichmachers 4 bis 20 Massenteile, auf 100 Massenteile der Kautschukkomponente bezogen, beträgt.

3. Innenseele nach Anspruch 1, wobei die Kautschukzusammensetzung des Weiteren 30 bis 70 Massenteile Ruß, auf 100 Massenteile der Kautschukkomponente bezogen, enthält.

4. Innenseele nach Anspruch 3, wobei der Ruß eine GPF- und/oder FEF-Güteklasse besitzt.

5. Luftradialreifen umfassend eine Innenseele nach einem der Ansprüche 1 bis 4.

6. Luftradialreifen nach Anspruch 5, der irgendein Reifen für ein Flugzeug und ein Reifen für einen Lastwagen oder Autobus ist.

## Revendications

1. Calandrage intérieur pour un pneu, comprenant une composition de caoutchouc qui comprend 1 à 30 parties en masse d'un plastifiant ayant une température de transition vitreuse non supérieure à -90°C pour 100 parties en masse d'un constituant de caoutchouc comprenant 0 à 20% en masse de caoutchouc naturel et/ou de caoutchouc isoprène synthétique et 80 à 100% en masse de caoutchouc butyle halogéné,
dans lequel ladite température de transition vitreuse est mesurée avec un calorimètre différentiel à balayage (DSC) d'après ASTM D3418-82.

2. Calandrage intérieur selon la revendication 1, dans lequel la quantité du plastifiant mélangé est de 4 à 20 parties en masse pour 100 parties en masse du constituant de caoutchouc.

3. Calandrage intérieur selon la revendication 1, dans lequel la composition de caoutchouc contient en outre 30 à 70 parties en masse de noir de carbone pour 100 parties en masse du constituant de caoutchouc.

4. Calandrage intérieur selon la revendication 3, dans lequel le noir de carbone est de qualité GPF et/ou FEF.

5. Pneu radial pneumatique, comprenant un calandrage intérieur selon l'une quelconque des revendications 1 à 4.

6. Pneu radial pneumatique selon la revendication 5, qui est l'un quelconque parmi un pneu pour un avion et un pneu pour un camion ou un autobus.
